# EUROPEAN PATENT APPLICATION

(11) **EP 4 712 077 A1**
(43) Date of publication of application: **18.03.2026**
(21) Application number: 25201895.7
(22) Date of filing: 12.09.2025
(51) Int. Cl.: G10L 21/003, G10L 13/02, G10L 15/18, G10L 25/30

(54) **GENERATING TRAINING DATA USING AN AUDIO GENERATION MODEL**

(30) Priority: 13.09.2024 US 202418885422
(71) Applicant: GDM Holding LLC, Mountain View, CA 94043 (US)
(72) Inventor: BORSOS, Zalán, 8002 Zurich (CH); TAGLIASACCHI, Marco, 8002 Zurich (CH)
(74) Representative: Marks & Clerk GST

(57) **Abstract**

Methods, systems, and apparatus, including computer programs encoded on computer storage media, for generating a set of training data for training a speech processing model. One of the methods may include receiving a plurality of source audio signals that each represent speech; generating, for each source audio signal, a respective semantic representation of the source audio signal; obtaining, for each of a plurality of speakers, a respective speaker prompt embedding characterizing speech of the speaker; generating, for each source audio signal, one or more synthetic audio signals; and generating a set of training data for training a speech processing model, wherein the set of training data comprises a plurality of paired training examples.

## Description

### BACKGROUND

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

### SUMMARY

This specification generally describes a system implemented as computer programs on one or more computers in one or more locations for generating a set of training data for training a speech processing model.

The invention is set out in the independent claims; further aspects are defined in the dependent claims.

According to one aspect there is provided a method comprising: receiving a plurality of source audio signals that each represent speech; generating, for each source audio signal, a respective semantic representation of the source audio signal; obtaining, for each of a plurality of speakers, a respective speaker prompt embedding characterizing speech of the speaker; generating, for each source audio signal, one or more synthetic audio signals, comprising: for each of one or more respective speaker prompt embeddings selected from the respective speaker prompt embeddings, providing an input comprising (i) the respective semantic representation of the source audio signal and (ii) the respective speaker prompt embedding to an audio generation model to generate a respective synthetic audio signal corresponding to the source audio signal and the speaker prompt embedding, wherein the respective synthetic audio signal represents the speech represented by the source audio signal spoken by the speaker characterized by the speaker prompt embedding; and generating a set of training data for training a speech processing model, wherein the set of training data comprises a plurality of paired training examples, each paired training example comprising (i) a respective source audio signal, (ii) a respective synthetic audio signal generated from the respective source audio signal, and (iii) a respective speaker prompt for a speaker that is speaking in the respective synthetic audio signal.

In some implementations, the method further comprises: generating, for each source audio signal, a transcript of the speech of the source audio signal.

In some implementations, the input further comprises (iii) the transcript of the speech of the source audio signal.

In some implementations, the method further comprises training the speech processing model on the set of training data.

In some implementations, the respective speaker prompt for the speaker comprises the respective speaker prompt embedding from which the respective synthetic audio signal was generated.

In some implementations, the respective speaker prompt for the speaker comprises a speaker prompt audio signal represented by the respective speaker prompt embedding from which the respective synthetic audio signal was generated.

In some implementations, obtaining, for each of a plurality of speakers, a respective speaker prompt embedding characterizing speech of the speaker comprises: receiving, for each of the plurality of speakers, a respective speaker prompt audio signal for the speaker; and generating each of the respective speaker prompt embeddings from the respective speaker prompt audio signals.

In some implementations, generating each of the respective speaker prompt embeddings from the respective speaker prompt audio signals comprises providing each respective speaker prompt audio signal as input to an encoder to generate the respective speaker prompt embedding.

In some implementations, the encoder comprises an encoder neural network of a neural audio codec.

In some implementations, generating, for each source audio signal, a respective semantic representation of the source audio signal comprises providing each source audio signal as input to a semantic tokenizer to generate the respective semantic representation.

In some implementations, the audio generation model is configured to generate the respective synthetic audio signal by processing an encoded representation derived from the input using a token decoder neural network to generate a sequence of output tokens representing the respective synthetic audio signal.

In some implementations, the audio generation model is configured to generate the respective synthetic audio signal by processing a masked representation of the respective synthetic audio signal derived from at least the input using a neural network to generate a sequence of output tokens representing the respective synthetic audio signal.

In some implementations, the speech processing model is configured to generate an output audio signal by processing an encoded representation derived from an input source audio signal and an input speaker prompt for a speaker using a token decoder neural network to generate a sequence of output tokens representing the output audio signal.

In some implementations, the speech processing model is configured to generate an output audio signal by:
obtaining a stream of input source audio tokens for an input source audio signal up to a current time step;
obtaining a stream of input speaker audio tokens for an input speaker prompt for a speaker up to the current time step; and
processing an encoded representation derived from at least some of the input source audio tokens up to the current time step and at least some of the input speaker audio tokens up to the current time step using a token decoder neural network to predict a stream of audio output tokens representing at least part of the output audio signal.

In some implementations, the speech processing model is configured to generate an output audio signal by processing a masked representation of the output audio signal derived from an input source audio signal and an input speaker prompt for a speaker using a neural network to generate a sequence of output tokens representing the output audio signal.

According to another aspect there are provided one or more computer storage media storing instructions that when executed by one or more computers cause the one or more computer to implement the methods described herein.

According to another aspect there is provided a system comprising: one or more computers; and one or more storage devices storing instructions that, when executed by the one or more computers, cause the one or more computers to perform the respective operations of the methods described herein.

Particular embodiments of the subject matter described in this specification can be implemented so as to realize one or more of the following advantages.

Training speech processing models to perform tasks such as speech-to-speech voice conversion requires a large set of training data. Parallel data for these tasks, also referred to as paired data, that includes input speech by a first speaker, and output speech by a second speaker with the same spoken content, and other characteristics such as prosody and timing, as the input speech, is rare and difficult to obtain. Compared to conventional systems for training a speech processing model, the system described in this specification allows for training the speech processing model without requiring a large amount of parallel data for training. For example, the system described in this specification generates a set of training data for training the speech processing model by generating synthetic audio signals.

By using an audio generation model to generate a set of training data with synthetic and realistic audio signals, the system increases the number of training examples available for training, resulting in improved training and performance of the speech processing model. Furthermore, by making use of the described techniques, training the audio generation model does not require parallel training data. The system can thus enable the generation of synthetic parallel data for training a speech processing model, resulting in better performance for the speech processing model compared to a speech processing model trained on a limited amount of parallel data.

The system described in this specification allows for performing speech processing tasks that process a target voice prompt, such as speech-to-speech voice conversion, using a speech processing model. In speech-to-speech voice conversion, the speech processing model processes an input audio signal and a target voice prompt, and generates an output audio signal that preserves the same spoken content, prosody, and timing as the input audio signal, spoken in the target voice.

Some conventional approaches for performing speech-to-speech voice conversion rely on designing special representations for a target voice prompt, such as timing tokens and phonetic representations, that decouple the speaker characteristics from the target voice prompt. A speech processing model trained on the training dataset as described in this specification performs speech-to-speech voice conversion using a speech processing model that can be conditioned on multiple inputs without requiring a special representation for the target voice prompt. For example, the speech processing model can be trained on a synthetic dataset with paired training examples generated by an audio generation model. By not requiring a special representation for the target voice prompt, the speech processing model described in this specification can more easily be used to perform speech-to-speech voice conversion on a target voice prompt.

Some conventional approaches for performing speech-to-speech voice conversion require receiving the entire input audio signal and target voice prompt to be converted before performing the voice conversion. In some implementations, the speech processing model trained on the training dataset as described in this specification can perform voice conversion in real-time. The synthetic audio signals of the set of training data represent speech with exact temporal synchronization with the input audio signals, enabling both offline and real-time voice conversion. For example, the speech processing model can be configured to generate an output audio signal by obtaining a stream of input source audio tokens up to a current time step and a stream of input speaker audio tokens up to the current time step. The speech processing model can process an encoded representation derived from at least some of the input source audio tokens up to the current time step and at least some of the input speaker audio tokens up to the current time step using a token decoder neural network to predict a stream of audio output tokens representing at least part of the output audio signal.

In some examples, the system described in this specification can also provide for performing speech-to-speech voice conversion as a post-processing module of speech synthesis. For example, a machine learning model can be configured to generate speech for a specific speaker, but in some cases the machine learning model does not perform well and generates speech for a speaker other than the specific speaker. In these cases, the speech processing model described in this specification can perform speech-to-speech conversion given the speech generated by the machine learning model and a target voice prompt for the specific speaker, ensuring that speech is generated for the specific speaker's voice.

The system described in this specification can also provide for performing speech-to-speech conversion that retains the privacy of the speakers of input source audio signals representing speech. For example, the speech processing model described in this specification can be used to generate output audio signals representing speech spoken by different speakers than the speakers of the input source audio signals, while preserving the prosodic richness and expressivity of the input source audio signals.

In some examples, the system described in this specification can generate training data for training vocoders that convert semantic tokens to audio while targeting a specific voice. For example, the system described in this specification can generate synthetic audio signals for different combinations of input audio signals and target speaker prompts. The system can generate training examples that include the synthetic audio signal and semantic tokens representing the synthetic audio signal. The system described in this specification can also generate training data for the vocoder in cases where the semantic tokens contain speaker information.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A shows an example training data generation system.
FIB. 1B shows another example training data generation system.
FIG. 2 shows an example speech processing model.
FIG. 3 shows another example training data generation system.
FIG. 4 shows an example process for training an audio generation model.
FIG. 5 shows an example audio generation model.
FIG. 6 is a flow diagram of an example process for generating training data.

Like reference numbers and designations in the various drawings indicate like elements.

### DETAILED DESCRIPTION

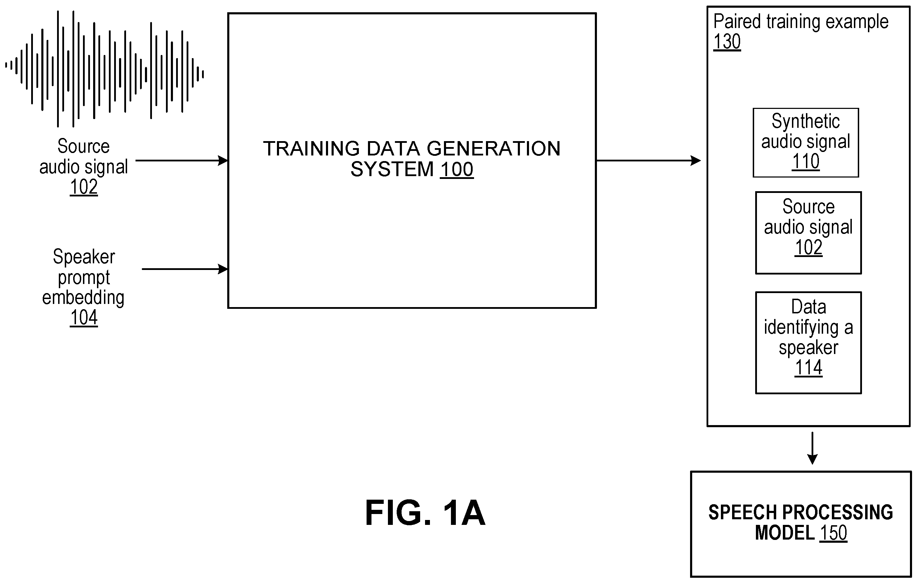

FIG. 1A shows an example training data generation system 100. The system 100 is an example of a system implemented as computer programs on one or more computers in one or more locations in which the systems, components, and techniques described below are implemented.

The training data generation system 100 generates training data that includes paired training examples such as the paired training example 130. Each paired training example can include a source audio signal, a synthetic audio signal, and a speaker prompt for a speaker that is speaking in the synthetic audio signal. For example, the source audio signal can include input speech by a first speaker. The synthetic audio signal includes output speech by a second speaker with the same spoken content, and other characteristics such as prosody and timing, as the input speech.

Once the system 100 has generated the training data, a training system of the system 100 or another training system can train a speech processing model 150 on the training data generated by the training data generation system 100. The speech processing model 150 can be configured to perform a speech processing task, e.g., by processing one or more inputs in accordance with current values of parameters of the speech processing model 150 to generate an output audio signal. For example, the speech processing model 150 can be configured to receive an input source audio signal and an input speaker prompt for a speaker to generate an output audio signal. As a particular example, the task may be speech-to-speech voice conversion and the output can represent the speech represented by the input source audio signal, spoken by the speaker of the input speaker prompt.

Generally, the output audio signal is an output audio example that includes a sample of an audio wave at each of a sequence of output time steps that span a specified time window. For example, the output time steps can be arranged at regular intervals within the specified time window.

The audio sample at a given output time step can be an amplitude value of the audio wave or an amplitude value that has been compressed, companded, or both. For example, the audio sample can be a raw amplitude value or a mu-law companded representation of the amplitude value.

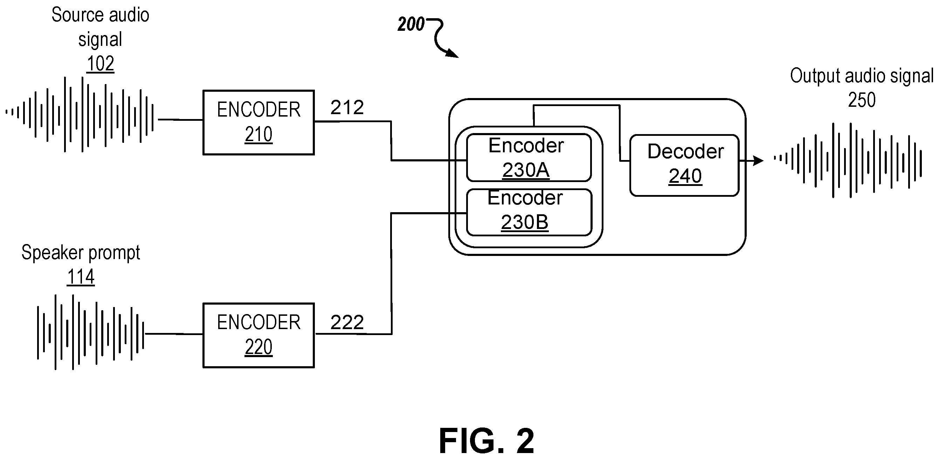

The speech processing model 150 can have any appropriate architecture for performing a speech processing task. For example, the speech processing model 150 can be configured to generate an output audio signal given an input source audio signal and an input speaker prompt for a speaker. For example, the speech processing model 150 can include one or more encoder neural networks and a token decoder neural network. In some examples, the speech processing model 150 can include an attention-based neural network, e.g., a Transformer-based neural network. An example speech processing model is described with reference to FIG. 2.

As part of generating the training data, the system 100 receives a source audio signal 102. In some examples, the source audio signal 102 can be part of an initial set of training data. The source audio signal represents speech by a particular speaker A.

The system 100 also obtains a speaker prompt embedding 104. The speaker prompt embedding characterizes speech of a speaker B that is a different speaker than speaker A.

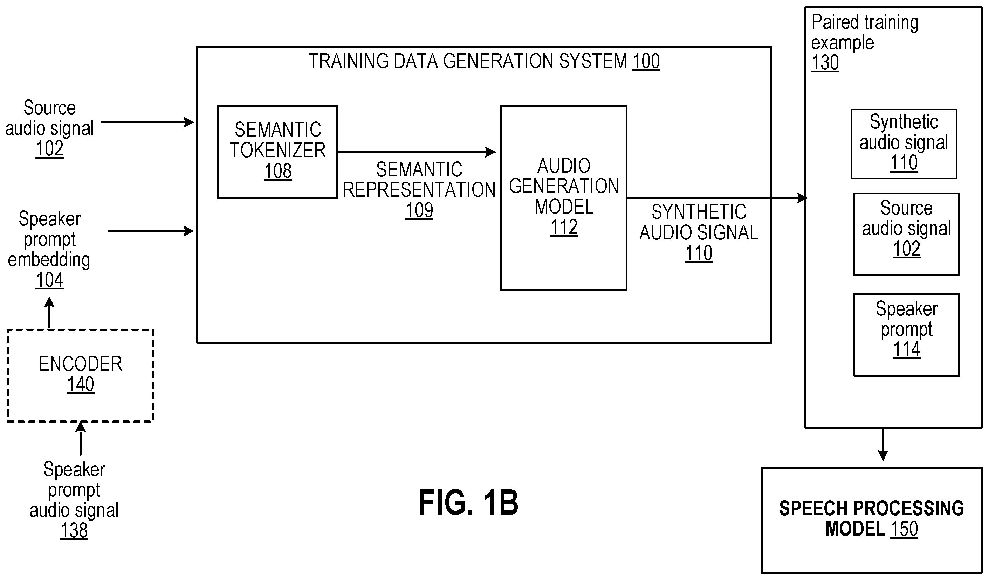

In some examples, the system 100 generates the speaker prompt embedding 104. For example, the system 100 can receive a speaker prompt audio signal for the speaker. The system 100 can generate the speaker prompt embedding 104 from the speaker prompt audio signal for speaker B. In some examples, the speaker prompt audio signal can be part of an initial set of training data. Generating the speaker prompt audio signal is described in more detail below with reference to FIG. 1B.

The system 100 generates one or more synthetic audio signals such as the synthetic audio signal 110 from the source audio signal 102 and the speaker prompt embedding 104. The synthetic audio signal 110 represents the speech represented by the source audio signal 102, spoken by the speaker characterized by the speaker prompt embedding 104. For example, the synthetic audio signal 110 represents the content that was spoken by speaker A represented in the source audio signal 102, spoken by the speaker B. To generate the synthetic audio signal, the system 100 can use an audio generation model as described below with reference to FIG. 1B.

The system 100 generates the paired training example 130 for including in the set of training data, i.e., in a set of multiple paired training examples. Each paired training example includes a source audio signal, a synthetic audio signal generated from the source audio signal, and a speaker prompt for a speaker that is speaking in the synthetic audio signal.

For example, the paired training example 130 includes the source audio signal 102, the synthetic audio signal 110, and a speaker prompt for a speaker 114. In the example of FIG. 1A, the speaker prompt 114 is for the speaker B.

In some examples, the speaker prompt114 includes the speaker prompt embedding from which the synthetic audio signal 110 was generated. That is, the speaker prompt 114 includes the speaker prompt embedding 104. In some examples, the speaker prompt 114 includes a speaker prompt audio signal represented by the speaker prompt embedding from which the synthetic audio signal 110 was generated. That is, the speaker prompt 114 includes the speaker prompt audio signal represented by the speaker prompt embedding 104.

For training a speech processing model to perform speech-to-speech voice conversion, for example, the synthetic audio signal 110 represents the ground-truth output for the speech processing model 150, and the source audio signal 102 and the speaker prompt 114 represent the training inputs.

The system 100 generates a set of training data with multiple paired training examples such as the paired training example 130. For each source audio signal, the system 100 can obtain multiple speaker prompt embeddings for different speakers. The system 100 can generate multiple paired training examples that have the same source audio signal, and different synthetic audio signals for the different speakers. The system 100 can also use the same speaker prompt embeddings for different source audio signals to generate multiple paired training examples that have speaker prompts for the same speaker, and synthetic audio signals that represent speech of different source audio signals. Furthermore, there are a large number of existing audio signals that can be used as source audio signals. In some examples, for each source audio signal, the system can generate the speaker prompt embeddings from other source audio signals, resulting in a large number of synthetic audio signals for each source audio signal. The system 100 can thus generate parallel data at scale with synthetic audio signals from different combinations of source audio signals and speaker prompt embeddings. That is, given a set of source audio signals, the system can automatically generate a large number of paired training examples 130 without requiring any pre-existing parallel data.

Training the speech processing model 150 on the set of training data generated by the system 100 results in better performance at inference compared to a speech processing model trained on a limited amount of parallel data. For example, training the speech processing model on a larger number and greater variation of training examples allows the speech processing model to generalize better to previously unseen inputs at inference.

FIG. 1B shows the example training data generation system 100 described above with FIG. 1A. In particular, in the example of FIG. 1B, the system 100 generates a synthetic audio signal using a semantic tokenizer 108, an audio generation model 112, and, in some implementations, an encoder 140.

The system 100 receives the source audio signal 102 as described above with reference to FIG. 1A.

The system 100 obtains the speaker prompt embedding 104 as described above with reference to FIG. 1A. In the example of FIG. 1B, the system 100 generates the speaker prompt embedding 104 from a speaker prompt audio signal 138.

For example, the system 100 can provide the speaker prompt audio signal 138 as input to the encoder 140 to generate the speaker prompt embedding 104. The speaker prompt embedding 104 includes a sequence of vectors representing the speaker prompt audio signal 138.

As an example, the encoder 140 can include an encoder neural network of a neural audio codec. As a particular example, the encoder 140 can be a SoundStream encoder of the SoundStream neural audio codec described in Zeghidour, Neil, et al., "Soundstream: An end-to-end neural audio codec." IEEE/ACM Transactions on Audio, Speech, and Language Processing 30 (2021): 495-507.

To generate the synthetic audio signal 110, the system 100 generates a semantic representation 109 of the source audio signal 102. The semantic representation specifies a respective semantic token at each of multiple first time steps spanning the source audio signal. Each semantic token is selected from a vocabulary of semantic tokens and represents semantic content of the audio signal 102 at the corresponding first time step. Examples of semantic content represented by the semantic tokens can include linguistic content, phonetics, language syntax, and prosodic features for speech. In some examples, the semantic tokens represent linguistic content, such as phonetics and semantics, and do not represent paralinguistic information, such as speaker identity and acoustic information.

The system 100 can use the semantic tokenizer 108 to generate the semantic representation 109. For example, the system 100 can provide the source audio signal 102 as input to the semantic tokenizer 108 to generate the semantic representation 109. The semantic tokenizer 108 can include an audio representation neural network that has been trained to generate representations of input audio. For example, the audio representation neural network can be a self-attention based model, e.g., a Transformer-based model or a Conformer-based model, e.g., a W2v-BERT neural network (described in Chung, Yu-An, et al., "W2v-bert: Combining contrastive learning and masked language modeling for self-supervised speech pre-training." 2021 IEEE Automatic Speech Recognition and Understanding Workshop (ASRU)). As an example, the audio representation neural network can be trained on a masked language modeling loss or a combination of a masked language modeling loss and a contrastive loss.

The semantic tokenizer 108 can generate the semantic tokens based on outputs of one or more layers, e.g., of one of the intermediate layers, of the audio representation neural network. For example, the semantic tokenizer 108 can generate the semantic representation by processing the audio signal using the audio representation neural network. The outputs of the one or more layers of the audio representation neural network can include an embedding of the source audio signal 102 for each of multiple time steps of the source audio signal 102. The semantic tokenizer 108 can generate the semantic representation by assigning each embedding for the source audio signal 102 to the closest semantic token of a set of semantic tokens. The set of semantic tokens can include the centroids of *K* clusters of embeddings for an intermediate layer of the audio representation neural network for a set of training audio samples.

The system 100 provides an input that includes the semantic representation 109 of the audio signal 102 and the speaker prompt embedding 104 as input to the audio generation model 112 to generate the synthetic audio signal 110 corresponding to the audio signal 102 and the speaker prompt embedding 104.

The audio generation model 112 is configured to generate an output audio signal given at least the semantic representation 109 and the speaker prompt embedding 104. For example, the audio generation model 112 can be any appropriate neural network that is configured to generate an output audio signal that preserves the same spoken content, prosody, and timing of the source audio signal 102, spoken in the voice characterized by the speaker prompt embedding 104.

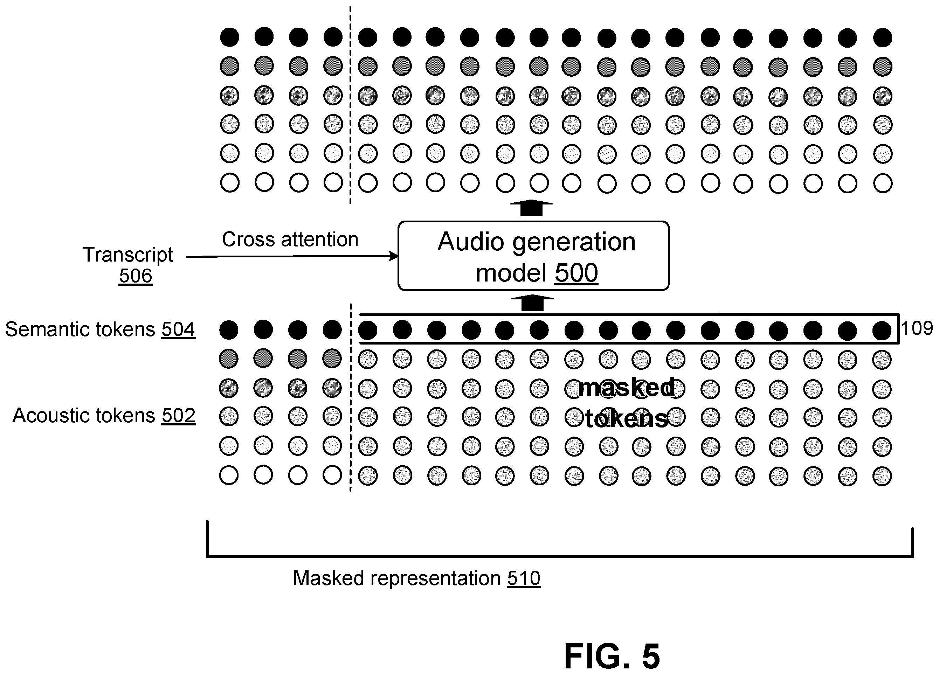

In some examples, the audio generation model 112 can be configured to generate the synthetic audio signal by processing a masked representation of the synthetic audio signal derived from at least the input using a neural network to generate a sequence of output tokens representing the synthetic audio signal. For example, the masked representation can include a sequence of input tokens that includes conditioning tokens derived from the input and masked tokens that represent acoustic tokens of the synthetic audio signal. Generating the synthetic audio signal 110 using the audio generation model 112 by processing a masked representation of the synthetic audio signal is described in further detail below with reference to FIG. 5.

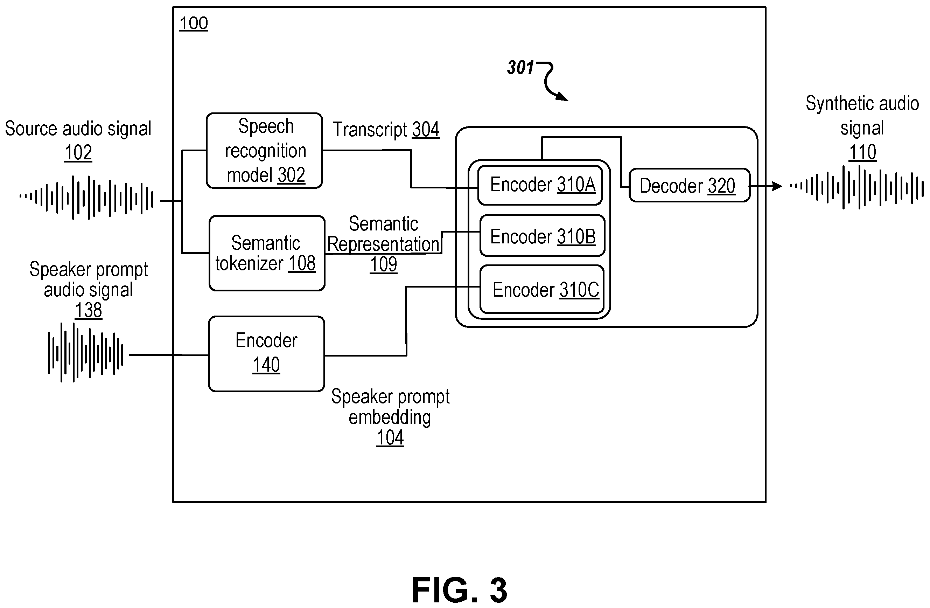

As another example, the audio generation model 112 can be configured to generate the synthetic audio signal by processing an encoded representation derived from the input using a token decoder neural network to generate a sequence of output tokens representing the synthetic audio signal. Generating the synthetic audio signal 110 using the audio generation model 112 using a token decoder neural network is described in further detail below with reference to FIG. 3.

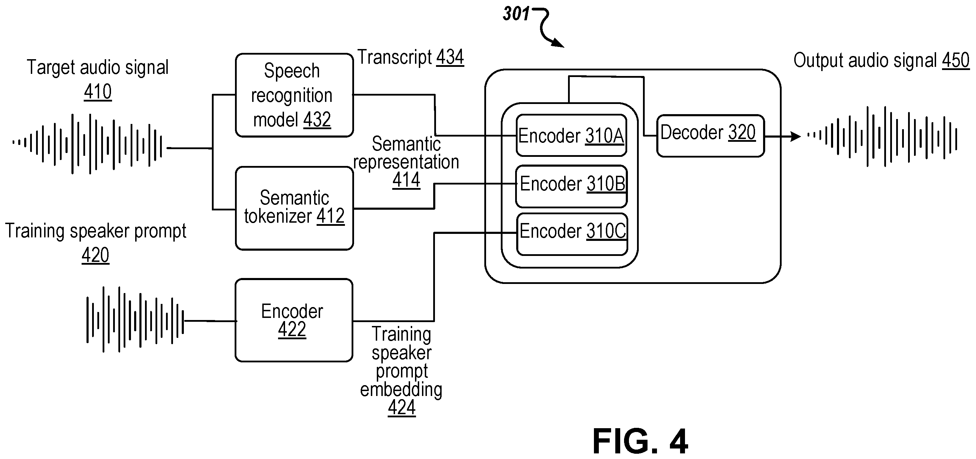

The audio generation model 112 can be trained to generate the synthetic audio signal on a dataset that includes target audio signals and corresponding speaker prompts. Training an example audio generation model 112 is described below with reference to FIG. 4.

In some implementations, the audio generation model 112 is configured to generate an output audio signal given the semantic representation 109, the speaker prompt embedding 104, and other inputs such as a transcript of the speech of the source audio signal 102. Generating the synthetic audio signal 110 given the semantic representation 109, the speaker prompt embedding 104, and the transcript of the speech of the source audio signal 102 is described in further detail below with reference to FIGS. 3 and 5.

The system 100 can generate multiple paired training examples such as the paired training example 130. For example, the system can generate a respective paired training example for different combinations of source audio signals and speaker prompt embeddings.

After the speech processing model 150 has been trained by the training system on the set of training data that includes paired training examples such as the paired training example 130, the system 100 or another inference system can use the speech processing model 150 to perform speech processing tasks. Examples of training the speech processing model 150 are described below with reference to FIG. 2. After having been trained on the set of training data, the speech processing model 150 can perform better than a speech processing model that is trained on a limited amount of parallel data.

FIG. 2 shows a speech processing model 200. The speech processing model 200 is an example of the speech processing model 150 described above with reference to FIGS. 1A-1B. In particular, the speech processing model 200 is configured to generate an output audio signal 250 by processing an encoded representation derived from an input source audio signal and an input speaker prompt using a token decoder neural network to generate a sequence of output tokens representing the output audio signal 250.

A training system of the system 100 described with reference to FIGS. 1A-1B or another training system can train the speech processing model 200 on a training dataset that includes paired training examples such as the paired training example 130 described with reference to FIGS. 1A-1B.

FIG. 2 shows the speech processing model 200 processing the training example 130. FIG. 2 shows the source audio signal 102 and the input speaker prompt 114 of the paired training example 130. The system trains the speech processing model 200 to reconstruct the synthetic audio signal 110 of the paired training example 130.

The system generates an input source audio signal embedding 212 of the input source audio signal 102. For example, the system can use an encoder 210 to generate the input source audio signal embedding 212. One example of the encoder 210 is described in more detail above with reference to FIGS. 1A-1B.

The system obtains a speaker embedding 222 for the input speaker prompt 114. In some examples, the input speaker prompt 114 includes a speaker prompt audio signal, and the system can use an encoder 220 to generate the training speaker prompt embedding 222 from the speaker prompt audio signal. One example of the encoder 220 is described in more detail above with reference to FIGS. 1A-1B. In some examples, the input speaker prompt 114 includes the speaker embedding 222.

The speech processing model 200 can be trained to reconstruct the synthetic audio signal 110 from the input source audio signal embedding 212 and the speaker embedding 222. As an example, the speech processing model 200 can have a similar architecture to the audio generation model 301 described below with reference to FIG. 3.

For example, the speech processing model 200 includes multiple encoders, e.g., encoder 230A and encoder 230B, and the token decoder neural network 240.

The speech processing model 200 generates an encoded representation derived from the input source audio signal 102 and the input speaker prompt 114. The speech processing model 200 processes the input source audio signal embedding 212 and the speaker embedding 222 using a corresponding encoder 230. Each encoder 230 is configured to generate a respective representation of the corresponding input. In some examples, each respective representation includes a sequence of embeddings for the corresponding input. For example, the speech processing model 200 processes the input source audio signal embedding 212 using the encoder 230A to generate a respective representation for the input source audio signal embedding 212. The speech processing model 200 processes the speaker embedding 222 using the encoder 230B to generate a respective representation for the speaker embedding 222.

The speech processing model 200 processes the respective representations using a shared encoder to generate the encoded representation as described with reference to FIG. 3 below. In some examples, the shared encoder includes a shared encoder neural network.

The speech processing model 200 processes the encoded representation using the token decoder neural network 240 to generate a sequence of output tokens representing the output audio signal 250. Each of the output tokens can be selected from a vocabulary of output tokens. One example of the token decoder neural network 240 is described in more detail below with reference to FIG. 3.

The speech processing model 200 generates the output audio signal 250 from the sequence of output tokens. For example, the speech processing model 200 processes the sequence of output tokens using an audio decoder neural network, described with reference to FIG. 3, to generate the output audio signal.

In some implementations, the speech processing model 200 is configured to generate the output audio signal 250 in real-time or near real-time after receiving audio frames of the input source audio signal 102. For example, the speech processing model 200 can generate parts of the output audio signal 250 with a small amount of latency after receiving audio frames of the input source audio signal 102, e.g., less than 100, 50, 40, or 20 milliseconds. In some examples, the speech processing model 200 operates with a real time factor (RTF) greater than 1.

For example, the speech processing model 200 can generate an initial part of the output audio signal 250 from an initial part of the input source audio signal 102 and the input speaker prompt 114, while the speech processing model 200 receives subsequent parts of the input source audio signal 102. In these implementations, the speech processing model 200 can include one or more streaming layers for generating the output audio signal 250 with low latency.

For example, the speech processing model 200 can obtain a stream of input source audio tokens for the input source audio signal 102 up to a current time step. The speech processing model 200 can also obtain a stream of input speaker audio tokens for the input speaker prompt 114 up to the current time step. For example, the speech processing model 200 can receive an input stream of audio input frames of the input source audio signal 102 and an input stream of the input speaker prompt 114. While the streams of audio input frames are received, the speech processing model 200 can tokenize the audio input frames to generate the stream of input source audio tokens and the stream of input speaker audio tokens.

The speech processing model 200 can process an encoded representation derived from at least some of the input source audio tokens up to the current time step and at least some of the input speaker audio tokens up to the current time step using the token decoder neural network 240 to predict a stream of audio output tokens representing at least part of the output audio signal 250. For example, the stream of audio output tokens can represent the output audio signal up to the current time step. The audio output tokens can include, for example, semantic tokens, acoustic tokens, or both.

For example, the token decoder neural network 240 can be configured to predict the stream of audio output tokens by applying causal attention to at least some of the input source audio tokens up to the current time step and at least some of the input speaker audio tokens up to the current time step. Because the token decoder neural network 240 applies causal attention, the token decoder neural network 240 predicts each audio output token for a current time step conditioned only on past information, for example, audio input tokens up to the current time step and any audio output tokens that were predicted up to the current time step. Thus the speech processing model 200 can generate the output audio signal in real-time or near real-time.

In some examples, training the speech processing model 200 can include training the components of the speech processing model 200 separately. For example, one or more of the corresponding encoders 230 or the audio decoder neural network can be pre-trained and frozen prior to training the token decoder neural network. Each of the corresponding encoders 230 can be pre-trained to generate a sequence of embeddings for the corresponding input.

The system can train the token decoder neural network 240 to generate the sequence of output tokens using a machine learning training technique, e.g., a gradient descent with backpropagation training technique that uses a suitable optimizer, e.g., stochastic gradient descent, RMSprop, Adam optimizer, or Adafactor optimizer, to optimize an objective function, e.g., a cross-entropy objective function that is specific to a next token prediction task.

The system can train the token decoder neural network 240 on training examples derived from the paired training examples. For example, the training input can include an encoded representation for the input source audio signal embedding 212 and the speaker embedding 222. In the example of FIG. 2, the ground-truth sequence of output tokens can include, for example, semantic tokens, acoustic tokens, or both representing the synthetic audio signal 110.

In some examples where the shared encoder includes a shared encoder neural network, the system can train the shared encoder neural network and the token decoder neural network 240 end-to-end to generate the sequence of output tokens from the respective representations of the input source audio signal embedding 212 and the speaker embedding 222.

The system can train the audio decoder neural network end-to-end with the encoder 140 on a mixture of reconstruction and adversarial losses, as described in Zeghidour, Neil, et al., "Soundstream: An end-to-end neural audio codec." IEEE/ACM Transactions on Audio, Speech, and Language Processing 30 (2021): 495-507.

As used herein, an input "stream" refers to a logically and/or semantically self-contained sequence of digital information. It is not required that a stream of input is continuous or entirely uninterrupted. In some cases, an input stream can be derived and/or sampled from analog data such as a voltage waveform generated from sound waves, although this is not required. With conventional techniques, an entire (e.g., logically and/or semantically self-contained) stream of input would have been processed at once, e.g., after the whole stream was received. For example, a speaker's source audio input may not be processed until they are finished speaking. By contrast, with techniques described herein, processing of the input stream begins while the speaker is still speaking.

In some examples, the speech processing model 200 is configured to generate the output audio signal 250 non-autoregressively. As an example, the speech processing model 200 can be configured to process a masked representation of the output audio signal 250 derived from an input source audio signal and an input speaker prompt using a neural network to generate a sequence of output tokens representing the output audio signal 250. The speech processing model 200 can process the sequence of output tokens using an audio decoder neural network to generate the output audio signal 250. An example audio decoder neural network, e.g., the audio decoder of the Soundstream neural audio codec, is described above.

In these examples, the speech processing model 200 can have a similar architecture to the audio generation model 500 described below with reference to FIG. 5.

For example, the speech processing model 200 can generate the sequence of output tokens from a masked representation over multiple iterations using a neural network. The masked representation includes a sequence of input tokens that includes a conditioning token or a masked token at each position in the sequence of input tokens. The conditioning tokens can include, for example, semantic tokens representing the input source audio signal, semantic tokens representing the input speaker prompt, and acoustic tokens representing the input speaker prompt.

Prior to the first iteration, at least some of the positions in the sequence of input tokens, e.g., that correspond to the acoustic tokens of the output audio signal 250, are occupied by masked tokens. The neural network iteratively updates the sequence of input tokens to unmask the sequence of input tokens, as described in more detail below with reference to FIG. 5. By iteratively updating the sequence of input tokens, the neural network can generate the sequence of output tokens that is an unmasked representation of the output audio signal 250.

As an example, the neural network can be the generative neural network described below with reference to FIG. 5. The system can train the generative neural network through self-supervised audio representation learning, or non-autoregressive audio generation via parallel, confidence-based decoding. For example, the system can train the generative neural network using a machine learning training technique, e.g., a gradient descent with backpropagation training technique that uses a conventional optimizer, e.g., stochastic gradient descent, RMSprop, or Adam optimizer, on an audio representation learning task based on optimizing an appropriate objective function for the task.

In one example, the audio representation learning task can be a masked audio modeling task. For each training example, the masked audio modeling task is a task that requires predicting, given a sequence of input tokens that include masked tokens, a sequence of output tokens that include unmasked tokens in place of the masked tokens and that represent an audio signal. In some examples, the system can train the generative neural network on training examples derived from the paired training examples. For example, the training input can include a sequence of input tokens that includes masked tokens and conditioning tokens representing the source audio signal 102 and the speaker prompt 114. The ground-truth sequence of output tokens can include, for example, a sequence of output tokens that includes unmasked tokens in place of the masked tokens and that represent the synthetic audio signal 110.

Generally, the objective function can be any function that evaluates a loss of the prediction outputs generated by the generative neural network with respect to the masked positions. That is, the objective function can include a term that evaluates, for each of one or more positions in the sequence of tokens that are occupied by masked tokens, a difference between: (i) the token that should occupy the position, and (ii) the respective prediction characterizing the token that should occupy the position generated by the generative neural network. For example, the difference can be evaluated as a cross-entropy loss.

The system can train the audio decoder neural network end-to-end with the encoder 140 as described above.

FIG. 3 shows the example training data generation system 100 described above with FIG. 1A. The audio generation model 301 is an example of the audio generation model 112 described above with reference to FIGS. 1A-1B. In particular, the audio generation model 301 is configured to generate the synthetic audio signal 110 by processing an encoded representation derived from the input using a token decoder neural network 320 to generate a sequence of output tokens representing the synthetic audio signal 110.

In the example of FIG. 3, the input includes the semantic representation 109 and the speaker prompt embedding 104. The audio generation model 301 can be configured to generate an output audio signal that represents the same spoken content as the source audio signal 102, preserves the prosody and timing of the source audio signal 102, and is spoken in the voice characterized by the speaker prompt embedding 104.

In some examples, the input can include any of a variety of types of data. For example, the input can include a transcript, data representing features of a video, data representing energy features of the source audio signal, data representing pitch features of the source audio signal, data representing spectral features of the source audio signal, and/or embeddings of the source audio signal. In some examples, the input can include a text input representing a sequence of one or more dialogue turns and corresponding input audio signals representing speech of the one or more dialogue turns.

In some of these examples, the system can generate one or more of the types of data. For example, the system can process the source audio signal 102 using a feature extraction engine to generate data representing pitch features of the source audio signal 102.

As a particular example, the input can include a transcript 304 of the speech of the source audio signal 102. In these examples, the audio generation model 301 can be configured to generate an output audio signal that represents spoken content specified by the transcript 304, preserves the prosody and timing of the source audio signal 102, spoken in the voice characterized by the speaker prompt embedding 104.

In some of these examples, the system generates the transcript 304 by performing automatic speech recognition. For example, the system can generate the transcript 304 by providing the source audio signal 102 as input to a speech recognition model 302.

By including the transcript 304 in the input, the system can improve the performance of the audio generation model 301. For example, for some languages, and for some input source audio signals, the semantic tokenizer 108 can output a semantic representation that does not accurately capture the semantic content of the input source audio signal. Thus, the synthetic audio signal 110 generated without the transcript 304 can include reconstruction errors such as phoneme errors. By including the transcript 304 in the input, the system can allow for generating more accurate synthetic audio signals or for multilingual support.

In some examples, the speech recognition model 302, the semantic tokenizer 106, and the encoder 140 can be part of the audio generation model 301. For example, the audio generation model 301 can receive the source audio signal 102 and the speaker prompt audio signal 138 as input. The audio generation model 301 can generate the semantic representation 109, speaker prompt embedding 104, and in some examples, the transcript 304, from the source audio signal 102 and the speaker prompt audio signal 138.

The audio generation model 301 generates an encoded representation derived from the input. The audio generation model 301 includes the multiple encoders 310 and the token decoder neural network 320. The audio generation model 301 includes multiple encoders, e.g., a corresponding encoder for each type of data in the input.

In the example of FIG. 3, the audio generation model 301 processes the semantic representation 109, the speaker prompt embedding 104, and in some examples, the transcript 304 using a corresponding encoder 310.

Each encoder 310 is configured to generate a respective representation of the corresponding type of data in the input. For example, the audio generation model 301 processes the transcript 304 using the encoder 310A to generate a respective representation for the transcript 304. The audio generation model 301 processes the semantic representation 109 using the encoder 310B to generate a respective representation for the semantic representation 109. The audio generation model 301 processes the speaker prompt embedding 104 using the encoder 310C to generate a respective representation for the speaker prompt embedding 104. In some examples, each respective representation includes a sequence of embeddings for the corresponding input.

In examples where the input includes other data in addition to or instead of the transcript 304, some of the corresponding encoders 310 can be configured to generate a respective representation for data representing features of a video, data representing energy features of the source audio signal, data representing pitch features of the source audio signal, data representing spectral features of the source audio signal, embeddings of the source audio signal, a text input representing a sequence of one or more dialogue turns, and corresponding input audio signals representing speech of the one or more dialogue turns. The audio generation model 301 processes the respective representations using a shared encoder to generate the encoded representation. In some examples, the shared encoder is configured to generate a combination, e.g., a concatenation, of the respective representations. In some examples, the shared encoder includes a shared encoder neural network that processes the concatenation to generate the encoded representation.

The audio generation model 301 processes the encoded representation using the token decoder neural network 320 to generate a sequence of output tokens representing the synthetic audio signal 110. Each of the output tokens can be selected from a vocabulary of output tokens. As an example, the token decoder neural network 320 can have a Transformer-based architecture.

In particular, the token decoder neural network 320 can be an auto-regressive neural network that auto-regressively generates the sequence of output tokens by generating each particular output token in the sequence conditioned on the encoded representation and a current input sequence that includes any tokens that precede the particular output token in the output sequence. The token decoder neural network 320 can apply a cross-attention mechanism over the encoded representation and the current input sequence.

In some examples, the output tokens in the vocabulary include semantic tokens. Each semantic token is selected from the vocabulary and represents semantic content of the synthetic audio signal 110.

In some examples, the output tokens in the vocabulary include acoustic tokens. Each acoustic token is selected from the vocabulary and represents acoustic properties of the synthetic audio signal 110. Examples of acoustic properties represented by the acoustic tokens can include reverberation, distortion, speaker identity, and background noise. Any appropriate set of acoustic tokens may be used. For example, an acoustic token can represent one of a plurality of code vectors in a codebook for a quantizer, e.g., a codebook for a vector quantizer included in a residual (i.e., multi-stage) vector quantizer (RVQ). For example, the set of acoustic tokens may be provided using the codebook of an audio codec such as a Soundstream neural audio codec.

Throughout this specification, a "residual vector quantizer" (RVQ) can refer to a multi-stage vector quantization technique that is based on a sequence of (residual) vector quantizers. A vector quantizer can quantize an input vector, e.g., by identifying a code vector from a codebook of code vectors associated with the vector quantizer, e.g., that has a smallest distance from the input vector, e.g., according to a distance metric (e.g., based on an L1 norm). The residual vector quantizer can quantize an input vector (or "signal") by iteratively quantizing the residual errors from previous quantization stages. Thus each stage in a residual vector quantizer encodes the difference (or residual) between the original signal and the reconstructed signal from the previous stage, thereby progressively refining the approximation of the original signal with each step.

In this example, the neural audio codec can include a hierarchy of multiple vector quantizers that each generate a respective acoustic token from a corresponding codebook of token vectors for the vector quantizer. The hierarchy includes one or more coarse vector quantizers at one or more first levels in the hierarchy and one or more fine vector quantizers at one or more last levels in the hierarchy. The output tokens can include, for each vector quantizer, a respective acoustic token selected from the codebook for the vector quantizer.

For example, the hierarchy can include *Q* vector quantizers arranged in the order of 1...*Q'*, (*Q'* + 1) *... Q,* and the vector quantizers 1...*Q'* can be coarse vector quantizers, and the vector quantizers (*Q*' + 1) ... *Q* can be fine vector quantizers. The coarse vector quantizers generate coarse acoustic tokens, or acoustic tokens for coarse vector quantizers, that can represent acoustic properties such as speaker identity and recording conditions. The fine vector quantizers generate fine acoustic tokens, or acoustic tokens for fine vector quantizers, that can represent fine acoustic details. For example, fine acoustic tokens can be used to remove lossy compression artifacts in the coarse acoustic tokens.

In some examples, the output tokens in the vocabulary include acoustic and semantic tokens. The sequence of output tokens can thus include semantic tokens and/or acoustic tokens. For example, the sequence of output tokens can include interleaved semantic tokens and acoustic tokens.

The audio generation model 301 generates the synthetic audio signal 110 from the sequence of output tokens. For example, the audio generation model 301 processes the sequence of output tokens using an audio decoder neural network to generate the synthetic audio signal 110.

In examples where the output tokens include acoustic tokens, the audio decoder neural network is configured to reconstruct an audio signal by processing acoustic tokens representing the audio signal. For example, the audio decoder neural network can include the decoder of the Soundstream neural audio codec.

In some examples where the output tokens include acoustic tokens and semantic tokens, the audio generation model 301 is configured to extract the acoustic tokens and provide the acoustic tokens as input to the audio decoder neural network. The audio decoder neural network is configured to reconstruct an audio signal by processing the acoustic tokens as described above.

In examples where the output tokens include semantic tokens, the audio generation model 301 is configured to generate acoustic tokens from the semantic tokens and provide the acoustic tokens as input to the audio decoder neural network. For example, the audio generation model 301 can use one or more generative neural networks to convert semantic tokens to acoustic tokens. Example generative neural networks for converting semantic tokens to acoustic tokens are described in Z. Borsos et al., "AudioLM: a Language Modeling Approach to Audio Generation," arXiv:2209.03143, which is hereby incorporated by reference in its entirety. The audio decoder neural network is configured to reconstruct an audio signal by processing the acoustic tokens as described above.

Thus the system can use the audio generation model 301 to generate the synthetic audio signal 110. Training the audio generation model 301 is described below with reference to FIG. 4.

In some implementations, the system can use the audio generation model 301 as a speech processing model. For example, in cases where the semantic tokenizer 108 performs well on speech of a particular language, the system 100 does not need to provide the transcript in the input to the audio generation model 301. In these examples, the system 100 can provide an input source audio signal and an input speaker prompt audio signal to the audio generation model 301. The audio generation model 301 can generate an output audio signal as described above for generating the synthetic audio signal 110.

FIG. 4 shows an example process for training the audio generation model 301 described above with reference to FIG. 3. A training system of the system 100 described with reference to FIGS. 1A-1B or another training system can train the audio generation model 301 on a dataset that includes target audio signals and corresponding training speaker prompts. Each target audio signal represents speech by a particular speaker. The corresponding training speaker prompt for each target audio signal can include an audio signal that represents speech by the particular speaker.

FIG. 4 shows a training example with the target audio signal 410 and the corresponding training speaker prompt 420. The system generates a semantic representation 414 of the target audio signal 410. For example, the system can use a semantic tokenizer 412 to generate the semantic representation 414. One example of the semantic tokenizer 412 is described in more detail above with reference to FIGS. 1A-1B.

The system generates a training speaker prompt embedding 424 of the training speaker prompt 420. For example, the system can use an encoder 422 to generate the training speaker prompt embedding 424. One example of the encoder 422 is described in more detail above with reference to FIGS. 1A-1B.

In some examples, the system generates a transcript 434 of the target audio signal 410. For example, the system can use a speech recognition model 432 to generate the transcript 434. One example of the speech recognition model 432 is described in more detail above with reference to FIG. 3.

The training system trains the audio generation model 301 to generate an output audio signal 450 that is a reconstruction of the target audio signal 410. The audio generation model 301 can be trained to reconstruct the target audio signal 410 from the semantic representation 414, the training speaker prompt embedding 424, and in some examples, the transcript 434. For example, the input for the training example includes the semantic representation 414 and the training speaker prompt embedding 424. In some examples, the input also includes the transcript 434. The output for the training example includes the target audio signal 410.

For example, the training system can train the token decoder neural network 320 on training examples with a training input derived from the semantic representation 414, the training speaker prompt embedding 424, and a ground-truth training output that includes a sequence of output tokens representing the target audio signal 410. In some examples, the training put can also be derived from the transcript 434. As described above with reference to FIG. 2, the training system can train the token decoder neural network 320 on a cross-entropy objective function that is specific to a next token prediction task.

FIG. 5 shows an example audio generation model 500. The audio generation model 500 is an example of the audio generation model 112 described above with reference to FIGS. 1A-1B. In particular, the audio generation model 500 is configured to generate the synthetic audio signal 110 by processing a masked representation of the synthetic audio signal derived from at least the input using a neural network to generate a sequence of output tokens representing the synthetic audio signal. The masked representation includes a sequence of input tokens.

The audio generation model 500 can generate the synthetic audio signal 110 using non-autoregressive decoding. For example, the audio generation model 500 can include a bidirectional attention-based Conformer model that is trained to predict acoustic tokens given a conditioning signal such as the semantic representation 109. The conditioning signal can also include the semantic tokens 504, acoustic tokens 502, or both, representing the speaker prompt. As described above, an acoustic token can represent one of a plurality of code vectors in a codebook for a quantizer.

For example, the audio generation model 500 can generate a sequence of output tokens that represents the synthetic audio signal 110 over multiple iterations from the masked representation 510. The masked representation includes a sequence of input tokens.

Prior to the first iteration, at least some of the positions in the sequence of input tokens are occupied by masked tokens. The audio generation model 500 iteratively updates the sequence of input tokens to unmask the sequence of input tokens.

More specifically, before the first iteration, the system can generate the masked representation 510 of the synthetic audio signal as a sequence of input tokens. The sequence of input tokens includes a respective token at each of a plurality of positions in the sequence of input tokens. The positions generally correspond to time steps spanning a specified time window of the synthetic audio signal. The positions can be partitioned into multiple frames (or segments), where the multiple frames can each include a fixed number of positions.

The sequence of input tokens includes masked tokens. That is, at least some of the positions in the sequence of input tokens are occupied by masked tokens. A "masked token" is a token that includes a predetermined numerical value and that signifies that the corresponding token in the sequence of input tokens has not been generated, e.g., selected from a predetermined set of tokens, yet. In the example of FIG. 5, the sequence of input tokens includes masked tokens at positions corresponding to acoustic tokens representing the synthetic audio signal 110.

In some implementations, the sequence of input tokens is composed entirely of masked tokens, i.e., includes a masked token at each of the plurality of positions in the sequence of input tokens.

In some implementations, the sequence of input tokens includes both masked tokens and conditioning tokens, e.g., includes a masked token at each of some of the plurality of positions in the sequence of input tokens, and includes a conditioning token at each of others of the plurality of positions in the sequence of input tokens. In other words, each position in the sequence of input tokens is occupied by either a masked token or a conditioning token.

In some of these implementations, the sequence of input tokens are arranged in a particular order. For example, the sequence of input tokens can include conditioning tokens followed by masked tokens.

In some implementations, some or all of the positions in the sequence of tokens are associated with a respective residual vector quantizer in a sequence of residual vector quantizers included in a neural audio codec (e.g., the neural audio codec described above) that are arranged in a hierarchical order. For example, the hierarchy can include one or more coarse vector quantizers at one or more first levels in the hierarchy and one or more fine vector quantizers at one or more last levels in the hierarchy.

In some examples, such as during training of the generative neural network, the sequence of input tokens includes masked tokens at randomly sampled positions.

The conditioning tokens can include semantic tokens, acoustic tokens, or both. In the example of FIG. 5, the conditioning tokens can include the semantic representation 109, and the semantic tokens 504 or the acoustic tokens 502, or both the semantic tokens 504 and the acoustic tokens 502.

For example, the system includes the semantic representation 109, i.e., the semantic tokens of the semantic representation 109, in the sequence of input tokens of the masked representation 510 of the synthetic audio signal 110. For example, the system can obtain the semantic representation 109 from the input.

In some examples, the system includes acoustic tokens 502 representing the speaker prompt in the sequence of input tokens of the masked representation 510. The acoustic tokens 502 can be generated in any of a variety of ways. For example, the system can generate the acoustic tokens 502 from the speaker prompt embedding of the input using one or more vector quantizers, e.g., a residual vector quantizer that includes a cascade of multiple vector quantizers. As an example, the first vector quantizer can quantize the vectors of the speaker prompt embedding, while each subsequent vector quantizer can quantize residual vectors that define the quantization error generated by the preceding vector quantizer.

In some examples, the system generates the acoustic tokens 502 from the speaker prompt audio signal represented by the speaker prompt embedding. For example, the system can generate the acoustic tokens 502 using a neural audio codec such as the Soundstream neural audio codec.

In some examples, the system includes semantic tokens 504 representing the speaker prompt in the sequence of input tokens of the masked representation 510. The semantic tokens 504 can be generated in any of a variety of ways. For example, the system can generate the semantic tokens 504 from the speaker prompt audio signal using a semantic tokenizer such as the semantic tokenizer 108 described with reference to FIGS. 1A-1B.

In some examples, the input also includes a transcript 506 of the speech of the source audio signal 102. In some examples, the system can use a speech recognition model such as the speech recognition model 302 described above with reference to FIGS. 1A-1B, to generate the transcript 506 from the source audio signal 102.

Thus, in the example of FIG. 5, the sequence of input tokens includes the semantic representation 109, the semantic tokens 504, and the acoustic tokens 502 as conditioning tokens, and the masked tokens that represent the acoustic tokens of the synthetic audio signal 110. In some examples, the semantic tokens 504, the acoustic tokens 502, the semantic tokens of the semantic representation 109, and the masked tokens are positioned in an interleaved pattern.

The audio generation model 500 uses a generative neural network to generate a sequence of output tokens from the sequence of input tokens over multiple iterations. Like the sequence of input tokens, the sequence of output tokens includes a respective output token at each of the positions in the sequence of output tokens, but the tokens that reside at these positions do not include any masked tokens. That is, the audio generation model 500 generates the sequence of output tokens by gradually unmasking all of the masked tokens that were originally included in the sequence of input tokens.

During each iteration, the audio generation model 500 performs a forward pass through the generative neural network, i.e., uses the generative neural network to process a network input in accordance with its parameters, to generate an updated sequence of input tokens. For the first iteration, the network input includes the sequence of input tokens. For any subsequent iteration, the network input includes the updated sequence of input tokens that has been generated in the immediately preceding iteration.

Then, at each iteration, the audio generation model 500 uses the generative neural network to process the network input to generate one or more new tokens to replace the respective masked tokens in the sequence of input tokens. That is, at each iteration, the generative neural network is used to generate an updated sequence of input tokens that has fewer masked tokens.

To generate the updated sequence of input tokens at each iteration, the generative neural network processes the network input to generate a sequence of embeddings. The generative neural network processes the sequence of embeddings to generate a sequence of pooled embeddings. The generative neural network processes the sequence of pooled embeddings to update the sequence of pooled embeddings by applying an attention mechanism. The generative neural network processes at least a portion of the updated sequence of pooled embeddings to generate, for each of one or more positions in the sequence of input tokens, a respective prediction characterizing a token that should occupy the position in the sequence of input tokens.

The audio generation model 500 selects one or more positions in the sequence of input tokens to be unmasked. Each position selected to be unmasked is occupied by a masked token.

In particular, the audio generation model 500 can start by identifying a subset of the sequence of input tokens that are eligible to be unmasked at the current iteration. For instance, each token in the sequence of input tokens can be associated with a respective vector quantizer at a particular level/position in a sequence of vector quantizers. The audio generation model 500 can be configured to unmask the tokens in the input sequence level by level, starting from the first level in the sequence of vector quantizers. Thus, the audio generation model 500 can identify the subset of the sequence of input tokens that are eligible for unmasking at the current iteration as any masked token in the input sequence of tokens that is associated with the level that is being unmasked at the current iteration.

After identifying the subset of the sequence of input tokens that are eligible to be unmasked at the current iteration, the audio generation model 500 can identify some or all of the tokens of the set of eligible tokens for unmasking at the current iteration.

In some cases, the audio generation model 500 can select all the tokens that are eligible to be unmasked at the current iteration as tokens that should be unmasked at the current iteration.

In other cases, the audio generation model 500 can select more than one but fewer than all of the tokens that are eligible to be unmasked at the current iteration as tokens that should be unmasked at the current iteration. For instance, for each token that is eligible to be unmasked at the current iteration, the audio generation model 500 can use the generative neural network to generate a score distribution over a set of possible tokens that can be selected to occupy the position currently occupied by the masked token. The system can identify a plurality of tokens associated with the highest confidence scores from among the tokens that are eligible to be unmasked at the current iteration as the tokens that should be unmasked at the current iteration. The "confidence score" for a masked token that is eligible to be unmasked can be based on the score distribution generated by the generative neural network for the masked token.

In some examples where different positions in the sequence of input tokens are associated with different vector quantizers in a sequence of vector quantizers included in a neural audio codec (e.g., the neural audio codec that is configured to generate acoustic tokens described above) that are arranged in a hierarchical order, for each position in the sequence of input tokens that is occupied by a masked token, the system can determine whether to select the position to be unmasked based on the residual vector quantizer associated with the position.

For example, the hierarchical order can be a coarse-to-fine order. That is, the hierarchy can include one or more coarse vector quantizers at one or more first levels in the hierarchy and one or more fine vector quantizers at one or more last levels in the hierarchy. In this example, the system can proceed to select, from among the plurality of positions in the sequence of input tokens, additional positions associated with a fine vector quantizer to be unmasked only after the positions within the plurality of positions in the sequence of input tokens that are associated with a coarse vector quantizer have all been unmasked.

After selecting the tokens to be unmasked, the audio generation model 500 determines, for each of the selected tokens, a respective unmasked token to occupy the position currently occupied by the masked token based on a prediction generated by the generative neural network for the token that should occupy the position.

In some implementations, the prediction generated by the generative neural network for the token that should occupy the position includes a score distribution over a predetermined set of tokens, i.e., includes a score for each token in the predetermined set of tokens. For example, the predetermined set of tokens can include the tokens that can represent a plurality of code vectors in a codebook for a quantizer, e.g., a codebook for a residual vector quantizer.

Then, for each of the plurality of positions selected to be unmasked, the unmasked token to occupy the position can be determined by greedily selecting the highest-scoring token or through sampling, e.g., using nucleus sampling or another sampling technique, from the score distribution.

The updated sequence of input tokens for the iteration can then be generated by replacing the masked tokens at some of the positions in the sequence of input tokens with the sampled tokens, i.e., by including the unmasked tokens in place of the masked tokens in the sequence of input tokens. The positions that have not been selected in the iteration remain occupied by masked tokens, and can be re-predicted by the generative neural network in the next iteration. Thus, at the end of the given iteration, the generative neural network can generate an updated sequence of input tokens-or, put another way, a partially masked representation of the audio signal-that has fewer masked tokens.

In examples where the input includes the transcript 506, the generative neural network is configured to perform a cross-attention mechanism over the transcript 506 and the network input at each iteration to generate the updated sequence of input tokens.

After the last iteration, the audio generation model 500 uses the updated sequence of input tokens that has been generated in the last iteration as the sequence of output tokens. The output tokens can include acoustic tokens representing the synthetic audio signal 110, for example. Further details are described in Borsos et al., SoundStorm: Efficient Parallel Audio Generation. arXiv preprint arXiv:2305.09636, 2023.

The audio generation model 500 generates the synthetic audio signal 110 from the sequence of output tokens. For example, the audio generation model 500 processes the sequence of output tokens using an audio decoder neural network to generate the synthetic audio signal 110. For example, the audio decoder neural network can include the decoder of the Soundstream neural audio codec.

Thus the system 100 described with reference to FIGS. 1A-1B can use an audio generation model such as the audio generation model 500 to generate the synthetic audio signal 110.

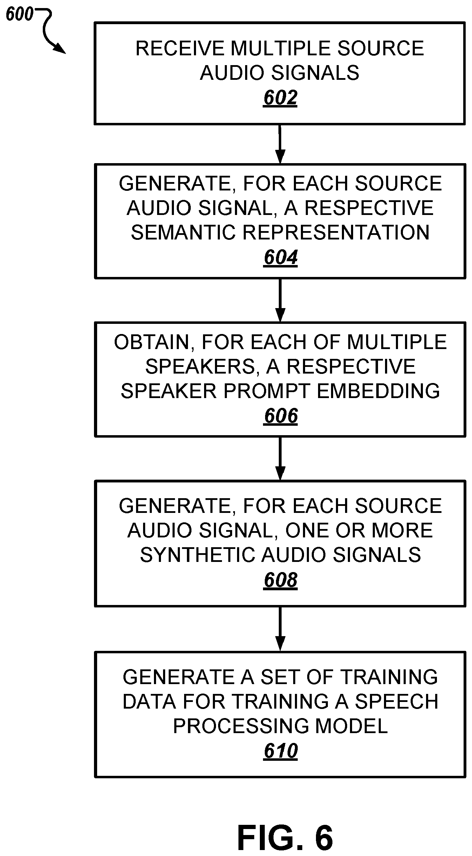

FIG. 6 is a flow diagram of an example process 600 for generating training data. For convenience, the process 600 will be described as being performed by a system of one or more computers located in one or more locations. For example, a training data generation system, e.g., the training data generation system 100 depicted in FIGS. 1A-1B, appropriately programmed in accordance with this specification, can perform the process 600.

The system receives multiple source audio signals (step 602). Each source audio signal represents speech.

The system generates, for each source audio signal, a respective semantic representation (step 604). For example, the system can use a semantic tokenizer such as the semantic tokenizer 108 of FIGS. 1A-1B to generate the respective semantic representations.

The system obtains, for each of multiple speakers, a respective speaker prompt embedding (step 606). Each respective speaker prompt embedding characterizes speech of one of the multiple speakers.

In some examples, the system obtains the respective speaker prompt embeddings by generating the respective speaker prompt embeddings. For example, the system can receive, for each of the multiple speakers, a respective speaker prompt audio signal for the speaker. The system can generate each of the respective speaker prompt embeddings from the respective speaker prompt audio signals. As a particular example, the system can provide each respective speaker prompt audio signal as input to an encoder to generate the respective speaker prompt embedding. For example, the system can provide each respective speaker prompt audio signal as input to the encoder 140 described above with reference to FIGS. 1A-1B.

The system generates, for each source audio signal, one or more synthetic audio signals (step 608). For example, for each source audio signal, the system selects one or more respective speaker prompt embeddings from the respective speaker prompt embeddings. As an example, the system can randomly sample from the respective speaker prompt embeddings.

For each of the selected respective speaker prompt embeddings for the audio signal, the system can provide an input that includes (i) the respective semantic representation of the source audio signal and (ii) the respective speaker prompt embedding to an audio generation model to generate a respective synthetic audio signal. The respective synthetic audio signal corresponds to the source audio signal and the speaker prompt embedding. The respective synthetic audio signal represents the speech represented by the source audio signal spoken by the speaker characterized by the speaker prompt embedding.

The audio generation model can be any appropriate model that is configured to generate a synthetic audio signal by processing the input. Example audio generation models 301 and 500 are described above with reference to FIGS. 3-5.

In some implementations, the system generates, for each source audio signal, a transcript of the speech of the source audio signal. In these implementations, the input also includes the transcript of the source audio signal.

The system generates a set of training data for training a speech processing model (step 610). The training data includes multiple paired training examples that each include (i) a respective source audio signal, (ii) a respective synthetic audio signal generated from the respective source audio signal, and (iii) a respective speaker prompt for the speaker that is speaking in the respective synthetic audio signal. For example, each paired training example includes a synthetic audio signal generated in step 608.

In some examples, the respective speaker prompt for the speaker that is speaking in the respective synthetic audio signal includes the respective speaker prompt embedding from which the respective synthetic audio signal was generated. In some examples, the respective speaker prompt for the speaker includes a speaker prompt audio signal represented by the respective speaker prompt embedding from which the respective synthetic audio signal was generated. That is, in examples where the system generates the speaker prompt embedding from a speaker prompt audio signal, the respective speaker prompt for the speaker includes the speaker prompt audio signal.

In some implementations, a training system of the system or another training system trains the speech processing model on the set of training data.

The speech processing model can be any model that is configured to generate an output audio signal to perform a speech processing task such as voice conversion given an input source audio signal and an input speaker prompt. Example speech processing models are described with reference to FIG. 2. As an example, the speech processing model can be configured to generate an output audio signal by processing an encoded representation derived from an input source audio signal and an input speaker prompt for a speaker using a token decoder neural network to generate a sequence of output tokens representing the output audio signal, as described with reference to FIG. 2. In some examples, the speech processing model can be configured to generate an output audio signal in real-time, as described with reference to FIG. 2.

In some examples, the speech processing model can be used as a post-processing module of speech synthesis. For example, a machine learning model can be configured to generate an audio signal representing speech for a specific speaker. In some cases, the audio signal represents speech for a speaker other than the intended specific speaker. The speech processing model can generate an output audio signal representing speech of the specific speaker given the audio signal generated by the machine learning model and an input speaker prompt for the specific speaker, ensuring that the output audio signal represents speech spoken in the specific speaker's voice.

In some examples, the system described in this specification can generate training data for training vocoders that convert semantic tokens to audio while targeting a specific voice. For example, the system described in this specification can generate synthetic audio signals for different combinations of input audio signals and target speaker prompts. The system can generate training examples that include the synthetic audio signal and semantic tokens representing the synthetic audio signal.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

In addition to the embodiments described above, the following embodiments are also innovative:
Embodiment 1 is a method comprising:
   receiving a plurality of source audio signals that each represent speech;
   generating, for each source audio signal, a respective semantic representation of the source audio signal;
   obtaining, for each of a plurality of speakers, a respective speaker prompt embedding characterizing speech of the speaker;
   generating, for each source audio signal, one or more synthetic audio signals, comprising:
      for each of one or more respective speaker prompt embeddings selected from the respective speaker prompt embeddings, providing an input comprising (i) the respective semantic representation of the source audio signal and (ii) the respective speaker prompt embedding to an audio generation model to generate a respective synthetic audio signal corresponding to the source audio signal and the speaker prompt embedding, wherein the respective synthetic audio signal represents the speech represented by the source audio signal spoken by the speaker characterized by the speaker prompt embedding; and
   generating a set of training data for training a speech processing model, wherein the set of training data comprises a plurality of paired training examples, each paired training example comprising (i) a respective source audio signal, (ii) a respective synthetic audio signal generated from the respective source audio signal, and (iii) a respective speaker prompt for a speaker that is speaking in the respective synthetic audio signal.
Embodiment 2 is the method of embodiment 1, further comprising:
   generating, for each source audio signal, a transcript of the speech of the source audio signal.
Embodiment 3 is the method of embodiment 2, wherein the input further comprises (iii) the transcript of the speech of the source audio signal.
Embodiment 4 is the method of any of embodiments 1-3, further comprising training the speech processing model on the set of training data.
Embodiment 5 is the method of any of embodiments 1-4, wherein the respective speaker prompt for the speaker comprises the respective speaker prompt embedding from which the respective synthetic audio signal was generated.
Embodiment 6 is the method of any of embodiments 1-5, wherein the respective speaker prompt for the speaker comprises a speaker prompt audio signal represented by the respective speaker prompt embedding from which the respective synthetic audio signal was generated.
Embodiment 7 is the method of any of embodiments 1-6, wherein obtaining, for each of a plurality of speakers, a respective speaker prompt embedding characterizing speech of the speaker comprises:
   receiving, for each of the plurality of speakers, a respective speaker prompt audio signal for the speaker; and
   generating each of the respective speaker prompt embeddings from the respective speaker prompt audio signals.
Embodiment 8 is the method of embodiment 7, wherein generating each of the respective speaker prompt embeddings from the respective speaker prompt audio signals comprises providing each respective speaker prompt audio signal as input to an encoder to generate the respective speaker prompt embedding.
Embodiment 9 is the method of embodiment 8, wherein the encoder comprises an encoder neural network of a neural audio codec.
Embodiment 10 is the method of any of embodiments 1-9, wherein generating, for each source audio signal, a respective semantic representation of the source audio signal comprises providing each source audio signal as input to a semantic tokenizer to generate the respective semantic representation.
Embodiment 11 is the method of any of embodiments 1-10, wherein the audio generation model is configured to generate the respective synthetic audio signal by processing an encoded representation derived from the input using a token decoder neural network to generate a sequence of output tokens representing the respective synthetic audio signal.
Embodiment 12 is the method of any of embodiments 1-11, wherein the audio generation model is configured to generate the respective synthetic audio signal by processing a masked representation of the respective synthetic audio signal derived from at least the input using a neural network to generate a sequence of output tokens representing the respective synthetic audio signal.
Embodiment 13 is the method of any of embodiments 1-12, wherein the speech processing model is configured to generate an output audio signal by processing an encoded representation derived from an input source audio signal and an input speaker prompt for a speaker using a token decoder neural network to generate a sequence of output tokens representing the output audio signal.
Embodiment 14 is the method of any of embodiments 1-13, wherein the speech processing model is configured to generate an output audio signal by:
   obtaining a stream of input source audio tokens for an input source audio signal up to a current time step;
   obtaining a stream of input speaker audio tokens for an input speaker prompt for a speaker up to the current time step; and
   processing an encoded representation derived from at least some of the input source audio tokens up to the current time step and at least some of the input speaker audio tokens up to the current time step using a token decoder neural network to predict a stream of audio output tokens representing at least part of the output audio signal.
Embodiment 15 is the method of any of embodiments 1-14, wherein the speech processing model is configured to generate an output audio signal by processing a masked representation of the output audio signal derived from an input source audio signal and an input speaker prompt for a speaker using a neural network to generate a sequence of output tokens representing the output audio signal.
Embodiment 16 is a system comprising one or more computers and one or more storage devices storing instructions that, when executed by the one or more computers, cause the one or more computers to perform the method of any of embodiments 1-15.
Embodiment 17 is one or more non-transitory computer storage media storing instructions that when executed by one or more computers cause the one or more computers to perform the method of any of embodiments 1-15.
Embodiment 16 is a system comprising one or more computers and one or more storage devices storing instructions that, when executed by the one or more computers, cause the one or more computers to perform operations comprising:
   receiving a plurality of source audio signals that each represent speech;
   generating, for each source audio signal, a respective semantic representation of the source audio signal;
   obtaining, for each of a plurality of speakers, a respective speaker prompt embedding characterizing speech of the speaker;
   generating, for each source audio signal, one or more synthetic audio signals, comprising:
      for each of one or more respective speaker prompt embeddings selected from the respective speaker prompt embeddings, providing an input comprising (i) the respective semantic representation of the source audio signal and (ii) the respective speaker prompt embedding to an audio generation model to generate a respective synthetic audio signal corresponding to the source audio signal and the speaker prompt embedding, wherein the respective synthetic audio signal represents the speech represented by the source audio signal spoken by the speaker characterized by the speaker prompt embedding; and
   generating a set of training data for training a speech processing model, wherein the set of training data comprises a plurality of paired training examples, each paired training example comprising (i) a respective source audio signal, (ii) a respective synthetic audio signal generated from the respective source audio signal, and (iii) a respective speaker prompt for a speaker that is speaking in the respective synthetic audio signal.
Embodiment 17 is the system of Embodiment 16, further comprising:
   generating, for each source audio signal, a transcript of the speech of the source audio signal.
Embodiment 18 is the system of Embodiment 17, wherein the input further comprises (iii) the transcript of the speech of the source audio signal.
Embodiment 19 is the system of Embodiment 16, 17 or 18, further comprising training the speech processing model on the set of training data.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method comprising:
receiving a plurality of source audio signals that each represent speech;
generating, for each source audio signal, a respective semantic representation of the source audio signal;
obtaining, for each of a plurality of speakers, a respective speaker prompt embedding characterizing speech of the speaker;
generating, for each source audio signal, one or more synthetic audio signals, comprising:
for each of one or more respective speaker prompt embeddings selected from the respective speaker prompt embeddings, providing an input comprising (i) the respective semantic representation of the source audio signal and (ii) the respective speaker prompt embedding to an audio generation model to generate a respective synthetic audio signal corresponding to the source audio signal and the speaker prompt embedding, wherein the respective synthetic audio signal represents the speech represented by the source audio signal spoken by the speaker **characterized by** the speaker prompt embedding; and
generating a set of training data for training a speech processing model, wherein the set of training data comprises a plurality of paired training examples, each paired training example comprising (i) a respective source audio signal, (ii) a respective synthetic audio signal generated from the respective source audio signal, and (iii) a respective speaker prompt for a speaker that is speaking in the respective synthetic audio signal.

2. The method of claim 1, further comprising:
generating, for each source audio signal, a transcript of the speech of the source audio signal.

3. The method of claim 2, wherein the input further comprises (iii) the transcript of the speech of the source audio signal.

4. The method of any preceding claim, further comprising training the speech processing model on the set of training data.

5. The method of any preceding claim, wherein the respective speaker prompt for the speaker comprises the respective speaker prompt embedding from which the respective synthetic audio signal was generated.

6. The method of any preceding claim, wherein the respective speaker prompt for the speaker comprises a speaker prompt audio signal represented by the respective speaker prompt embedding from which the respective synthetic audio signal was generated.

7. The method of any preceding claim, wherein obtaining, for each of a plurality of speakers, a respective speaker prompt embedding characterizing speech of the speaker comprises:
receiving, for each of the plurality of speakers, a respective speaker prompt audio signal for the speaker; and
generating each of the respective speaker prompt embeddings from the respective speaker prompt audio signals; in particular
wherein generating each of the respective speaker prompt embeddings from the respective speaker prompt audio signals comprises providing each respective speaker prompt audio signal as input to an encoder to generate the respective speaker prompt embedding; more particularly
wherein the encoder comprises an encoder neural network of a neural audio codec.

8. The method of any preceding claim, wherein generating, for each source audio signal, a respective semantic representation of the source audio signal comprises providing each source audio signal as input to a semantic tokenizer to generate the respective semantic representation.

9. The method of any preceding claim, wherein the audio generation model is configured to generate the respective synthetic audio signal by processing an encoded representation derived from the input using a token decoder neural network to generate a sequence of output tokens representing the respective synthetic audio signal.

10. The method of any preceding claim, wherein the audio generation model is configured to generate the respective synthetic audio signal by processing a masked representation of the respective synthetic audio signal derived from at least the input using a neural network to generate a sequence of output tokens representing the respective synthetic audio signal.

11. The method of any preceding claim, wherein the speech processing model is configured to generate an output audio signal by processing an encoded representation derived from an input source audio signal and an input speaker prompt for a speaker using a token decoder neural network to generate a sequence of output tokens representing the output audio signal.

12. The method of any preceding claim, wherein the speech processing model is configured to generate an output audio signal by:
obtaining a stream of input source audio tokens for an input source audio signal up to a current time step;
obtaining a stream of input speaker audio tokens for an input speaker prompt for a speaker up to the current time step; and
processing an encoded representation derived from at least some of the input source audio tokens up to the current time step and at least some of the input speaker audio tokens up to the current time step using a token decoder neural network to predict a stream of audio output tokens representing at least part of the output audio signal.

13. The method of any preceding claim, wherein the speech processing model is configured to generate an output audio signal by processing a masked representation of the output audio signal derived from an input source audio signal and an input speaker prompt for a speaker using a neural network to generate a sequence of output tokens representing the output audio signal.

14. A system comprising one or more computers and one or more storage devices storing instructions that, when executed by the one or more computers, cause the one or more computers to perform the operations of any of claims 1-13.

15. One or more non-transitory computer storage media storing instructions that when executed by one or more computers cause the one or more computers to perform the operations of any of claims 1-13.
